# EUROPEAN PATENT SPECIFICATION

(11) **EP 2 089 616 B1**
(45) Date of publication and mention of the grant of the patent: **16.04.2014**
(21) Application number: 06832359.1
(22) Date of filing: 14.12.2006
(51) Int. Cl.: F01N 9/00, F24H 8/00, G01N 27/00

(54) **METHOD AND SYSTEM OF BOILER CONDENSATE CONTROL**
METHODE UND SYSTEM FÜR KESSELKONDENSATREGELUNG
PROCÉDÉ ET SYSTÈME DE CONTRÔLE DE CONDENSAT DE CHAUDIÈRE

(43) Date of publication of application: 19.08.2009
(73) Proprietor: Sit la Precisa S.p.a., 35129 Padova (IT)
(72) Inventor: GIACON, Franco, 35138 Padova (IT); VENDRAMINI, Antonio, 35124 Padova (IT)
(74) Representative: Montevecchi, Emma
(86) International application number: PCT/IT2006/000849
(87) International publication number: WO 2008/072265

(56) References cited:
- DE-A1- 3 306 014
- DE-A1- 3 514 609
- US-A- 5 188 143
- US-A- 5 902 099

## Description

### Technical field

The invention relates to a method of condensate control for determining whether or not condensate is present, preferably but not exclusively for application in waste heat boilers. In particular, the invention relates to a method of control which minimises the phenomenon of electrolysis in the condensate sensor. The invention also relates to a system of control operating in accordance with the method.

### Technological background

In some boilers, called waste heat boilers, in order to increase combustion efficiency and reduce harmful pollutant emissions, the heat present in the waste fumes is recovered by means of a heat exchanger with water to which the fumes yield up their thermal energy.

The waste fumes however contain traces and chemical residues of the burnt gases and therefore when, as these cool, condensate forms inside the exchanger, this is generally acid (for example containing sulphuric acid) and may cause corrosion and/or malfunctioning of the exchanger (in particular of the exchange surfaces), which then necessitates replacement and/or repair of the exchanger.

It has therefore been found necessary to use appropriate technical devices to check whether or not condensate is present inside the exchanger so that, if it is present, cleaning of the exchanger can be carried out before condensate damage is irreparable.

The use of a condensate sensor to show the presence of condensate in boilers is known in the art: the sensor is placed in an appropriate position and indicates whether or not condensate is present inside the heat exchanger so that the boiler can if necessary be shut down and the heat exchanger cleaned. The sensor generally consists of a pair of electrodes between which a voltage is applied: if there is passage of current, this indicates the presence of condensate.

It has been noted, however, that in the presence of condensate a potential difference at the electrodes of the sensor causes a process of electrolysis which leads to deposition in the metal of the electrodes of a layer of waste material and salts present in the condensate liquid, rendering the sensor no longer useable.

In some embodiments, in order to avoid this disadvantage without having periodically to replace the sensor, an alternating voltage is applied to the latter, for example sinusoidal mains voltage at 50 Hz. For this solution to be feasible, however, an alternating signal must be available in the sensor control card.

Alternative solutions to this have also been used, for example making use of the fact that the condensate may be seen as a "diode" and utilising the flame signal amplifier on the control card. In this case there is, however, a problem of electromagnetic emissions which are difficult to control.

Document DE 3514609, which is considered to represent the closest prior art, discloses a control system for a condensate sensor for boilers according to the preamble of claim 1.

### Summary of the invention

The problem on which the invention is based is that of providing a method for condensate control together with a management system for a condensate sensor operating according to this method, structurally and functionally designed to overcome the limits described above with reference to the prior art cited.

This problem is solved by the present invention by means of a method and a system produced in accordance with the claims hereinafter.

### Brief description of the drawings

The characteristics and advantages of the invention will become clear from the detailed description of a preferred example of embodiment, illustrated by way of a non-limiting example, with reference to the accompanying drawings in which:
figure 1 is a schematic view of an example of embodiment of a management system for a condensate sensor produced according to the method of the present invention;
figure 1a is a schematic view of a second example of embodiment of a management system for a condensate sensor produced according to the method of the present invention;
figure 2 is a schematic view of a detail of the management system in figure 1 or 1a;
figure 3 is a flow chart of an example of the method of control of the sensor in figure 2.

### Preferred embodiments of the invention

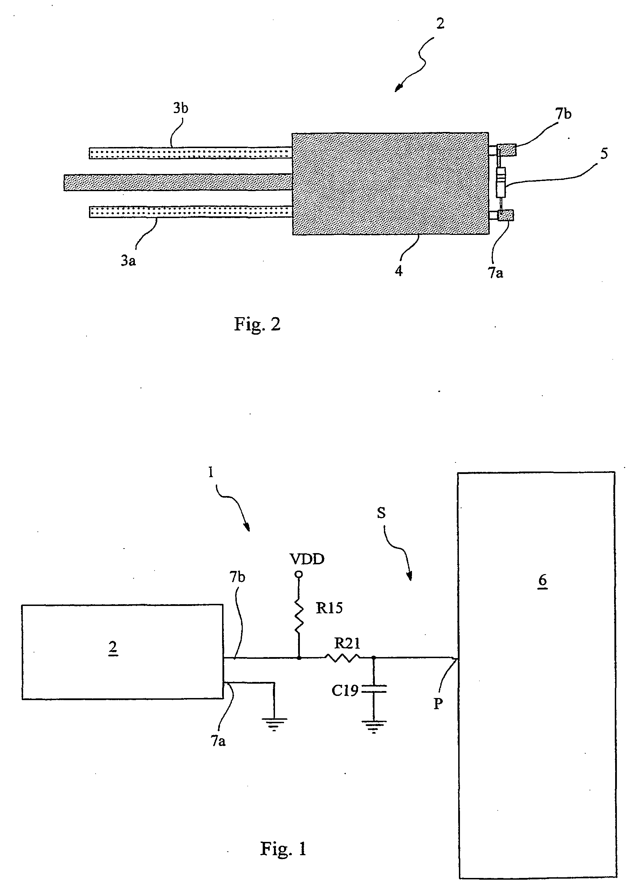

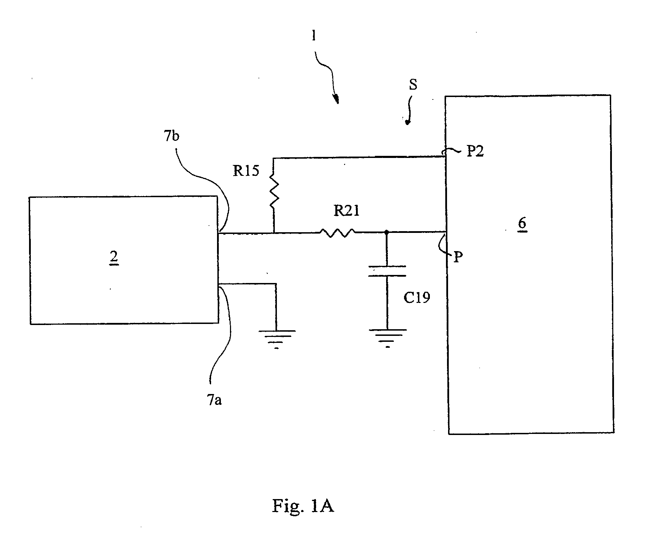

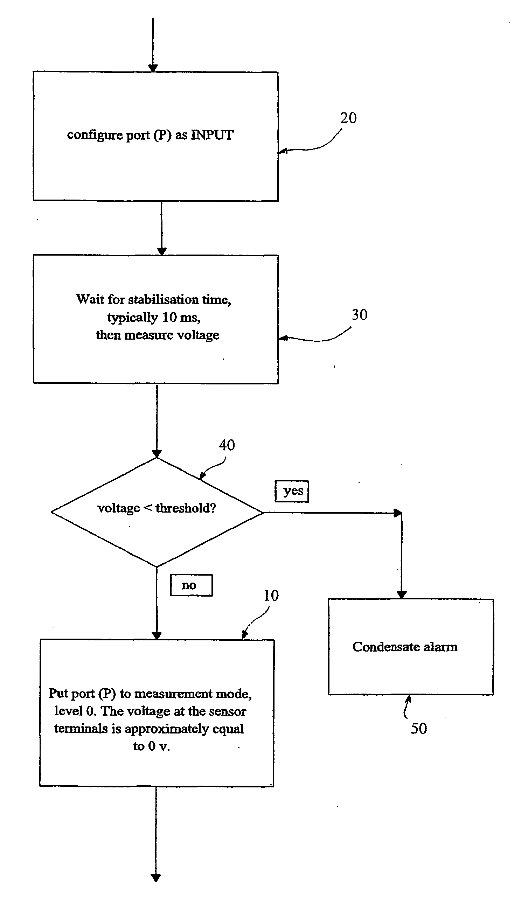

Referring initially to figure 1 (and 1a), 1 (1') denotes throughout a management system comprising a condensate sensor 2 produced in accordance with the present invention.

The condensate sensor 2 shown in detail in figure 2 preferably comprises two electrodes, first 3a and second 3b, made of metal, preferably steel, and is placed inside a heat exchanger (not shown) included in a waste heat boiler (also not shown).

As is known, waste heat boilers include an exchanger in which may form a condensate, generally containing corrosive substances, which is detected in the present invention by means of the sensor 2. The type of boiler and heat exchanger may vary greatly and is not limiting in respect of the present invention. The positioning of the sensor 2 inside the boiler is such that it comes into contact with the condensate when the latter forms inside the exchanger.

According to a preferred example of embodiment of the sensor 2, this also comprises a box-shaped body 4 of plastics material from which project the two electrodes 3a, 3b and a resistance 5 interposed between the electrodes 3a, 3b suitable for indicating failure of the sensor, as described below. There are therefore two contacts 7a, 7b for connection of the sensor 2, in particular its electrodes 3a, 3b, to a management card S for the sensor 2.

The sensor 2 functions substantially as a "variable resistance", i.e. the total resistance of the sensor 2 changes according to whether or not condensate is present in the exchanger (with which the sensor 2, in particular the electrodes 3a, 3b, is in contact) and therefore, by applying a potential difference between the two electrodes 3a, 3b in the manner described below, it is possible to determine whether or not condensate is present inside the exchanger.

In greater detail, on the card S the first electrode 3a of the sensor 2 is earthed (see figure 1 or 1a) while the second electrode 3b is connected, in the manner described below, to a DC voltage signal generator VDD by means of a resistance R15. The DC voltage signal VDD may be constant (i.e. the VDD voltage is always applied, as in system 1 shown in figure 1) or stepped, i.e. the VDD DC voltage may be applied only at predetermined time intervals (system 1' in figure 1a).

The electrode 3b is therefore connected, together with the voltage generator VDD, to a "switch" 6, in particular to a microprocessor, which may be moved between two operating positions called "standby" at which a voltage equal to zero (the meaning of "equal to zero" is given below) is imposed on the electrode 3b, and "active" at which the signal received from the sensor 2 is not modified. Preferably the connection between the electrode 3a and the microprocessor 6 is by means of a port P of the analogue/digital converter of the microprocessor 6.

According to the variant shown in figure 1, the VDD generator is a battery, while according to the variant in figure 1a, the VDD generator is a second port P2 of the microprocessor 6 which may be also be reconfigured between a "standby" and an "active" operating position (reconfiguration which substantially occurs at the same time as that of port P), i.e. at 0 V when the stage of measurement of the presence or not of condensate is not in progress and at the predetermined value of VDD when the measurement stage is in progress. Alternatively, the second port P2 may be configured as the input port in the "standby" stage.

Between the port P of the microprocessor and the electrode 3b of the sensor 2 there is a resistance R21 (for example 10 kΩ), to an extremity of which is also connected a condenser C19, preferably having a value of 190 nF, the opposite extremity of which is earthed.

The process of determining the presence of condensate inside the boiler exchanger by means of the sensor 2 according to the present invention is as follows. The functional flow diagram is given in figure 3.

When no measurement is being taken of the presence or not of condensate inside the boiler exchanger, stage 10 of the method, the port P is maintained in "standby" condition, in which it is configured as a digital output and is kept at a voltage equal to zero so that there is no potential difference between the two electrodes 3a, 3b of the condenser C19 (the first being earthed).

In reality, in the configuration shown in figure 1, in which VDD is a constant signal, although a voltage of 0 V is imposed at port P, there is a potential difference between the two electrodes 3a, 3b since the VDD voltage is applied constantly on the second electrode 3b and discharges to earth. Nevertheless if the correct values of VDD and the resistance R15 are selected, the potential difference present between the electrodes 3a, 3b is such as to generate a current which is substantially negligible in respect of the electrolysis phenomenon in the sensor 2. By means of experiments carried out by the Applicant it has been shown that electrolysis phenomena do not occur until there is a potential difference between the two electrodes 3a, 3b of 1 V. Therefore a potential difference "equal to zero" between the two sensors below should be understood to be a potential difference which may be considered negligible for the purpose of occurrence of the electrolysis phenomenon, i.e. a potential difference at which the electrolysis phenomenon in the sensor 2 is substantially absent or negligible.

Still in the non-measurement stage, if the VDD voltage generator is the port P2 of the microprocessor (figure 1a), this is also in "standby" configuration, i.e. as an input port, or is at a voltage of 0. In this case, the potential difference between the two electrodes 3a, 3b is effectively equal to zero.

In order to measure the condensate, a voltage present at the terminals of the two electrodes 3a, 3b must be measured. This voltage measurement, stage 20 of the method, is performed by the microprocessor 6 which therefore acts as the means of measurement: the port P is changed to the "active" operating position, i.e. it is re-programmed as an analogue input. In the case of the system in figure 1, VDD DC voltage is automatically applied to the sensor 2 for a predetermined (very brief) time and the resulting voltage at the terminals of the electrodes 3a, 3b, i.e. the input signal at port P, is read by the microprocessor 6 (stage 30). In the system 1' in figure 1a, at the same time as port P is re-programmed, the second port P2 which applies a VDD voltage is re-programmed.

The input voltage at port P will be called Vsens in the text below.

So as to avoid electrolysis, which would occur if a DC voltage were maintained for a relatively "long" time at the terminals of the two electrodes 3a, 3b, the time in which the measurement is performed, which is substantially equal to the time in which a voltage signal is maintained at the sensor 2 such as to be able to generate an electrolysis phenomenon in the sensor 2, i.e. the time in which there is a significant potential difference present at the terminals of the two electrodes 3a, 3b, is very short, in fact microseconds (for example 20 µs), which is insufficient time to trigger the chemical reaction of electrolysis, but is sufficient to obtain a voltage reading.

After the reading, the port P of the microprocessor 6 is returned to the "standby" position. In the case of system 1', the port P2 is also returned to the standby condition, i.e. either to input configuration or to 0 V. Preferably, before reading the voltage signal originating from the sensor, there is an interval of waiting for stabilisation, generally 10 ms (stage 30). The voltage signal originating from the sensor 2 is read at time intervals F, preferably set during sampling and which may be varied according to the type of application during programming or installation of the management system 1, 1'.

According to a preferred example of embodiment, the time interval for sampling to determine the presence or not of condensate is set at F = 5 seconds.

From the reading of the value of the voltage Vsens, which is therefore substantially an alternating voltage with period F, a function of the voltage at the terminals of the sensor 2, and which depends on the total resistance of the sensor which varies if condensate is present, the following analysis is performed at stage 40 of the method of the invention. The determined voltage value Vsens is compared, using appropriate means of comparison, with a first threshold value Vs1: if the value of the voltage Vsens is greater than this value Vs1 this means that there is no condensate and the system 1, 1' returns to the standby condition and resumes sampling of the value of voltage Vsens with time interval F at the terminals of the sensor 2.

If, however, the value of voltage Vsens of the sensor 2 is below this first threshold value Vs1, an alarm signal is generated (stage 50) by means of alarm which may be of various types, and preferably the boiler is shut down. For this purpose, the microprocessor 6 controls means of shutdown (not shown) which shut down the operation of the boiler.

The alarm signal may be indicated for example by the lighting of a red LED, the emission of a sound signal or the visualisation of a condensate alarm message on an appropriate display.

Optionally, the sampling of the signal Vsens coming from the sensor 2 is continued, at a different time interval F2, preferably at a longer time interval than the sampling in "normal" condition, for example F2 = 1 minute.

More preferably, according to the method of the invention, a second threshold value Vs2 is defined such that, if the measured voltage signal Vsens is greater than this second value, the sensor has failed and a further alarm signal is therefore sent, similar to the previous alarm signal or optionally indicated differently, which in any case causes shutdown of the boiler. Voltages which are too high indicate a malfunction and/or breakdown of the sensor itself (for example a contact 7a, 7b between sensor 2 and card S is broken): this voltage may be identified because of the presence of the resistance 5.

Values indicative of the thresholds mentioned above are Vs1= 3 V and Vs2= 5 V.

If the signal originating from the sensor returns to standard values, the system is self-resetting, i.e. sampling resumes at the original time interval and the boiler is automatically released from shutdown status.

The invention therefore solves the proposed problem with the addition of numerous advantages in respect of the prior art cited.

Above all, rapid damage to the sensor is avoided by preventing the occurrence of the electrolysis phenomenon since the voltage at the terminals of the sensor is present for an extremely limited time.

This management of the sensor may also be achieved in the absence of a connection to the alternating voltage network or to any other alternating current generator.

## Claims

1. Control system (1,1') for a condensate sensor (2) for boilers, comprising :
- a condensate sensor (2) positioned in an exchanger of said boiler so that when said condensate forms in said exchanger said sensor (2) is in contact with it, and comprising a first (3a) and a second electrode (3b),
- a DC voltage signal generator (VDD) electrically connected to said second electrode (3b),
- a microprocessor (6) electrically connected, by its port (P), to said second electrode (3b), **characterised in that** said first electrode (3a) being earthed, and said port (P) being reprogrammable from a first operating position in which the potential difference between said first (3a) and second electrode (3b) is substantially equal to zero and a second operating position in which it is an input port so that a voltage signal (Vsens) can be measured which is a function of the voltage at the terminals of said electrodes (3a,3b) of this sensor (2).

2. Control system (1, 1') according to claim 1, wherein said port (P) of said microprocessor (6) is reprogrammable from digital output, corresponding to said first operating position, to analogue input, corresponding to said second operating position.

3. Control system (1) according to either claim 1 or claim 2, wherein said generator of a DC voltage signal (VDD) is a battery.

4. Control system (1') according to either claim 1 or claim 2, wherein said generator of a DC voltage signal (VDD) is a second port (P2) of said microprocessor (6) which can be moved from a first to a second operating position.

5. Control system (1, 1') according to one or more of the preceding claims, including means of measurement (6) to measure said voltage signal (Vsens) which is a function of the voltage at the terminals of said electrodes (3a,3b) of said sensor (2).

6. Control system (1, 1') according to one or more of the preceding claims, including a comparator suitable for comparing said measured voltage (Vsens) with a first predetermined threshold voltage (Vs1).

7. Control system (1, 1') according to claim 6, comprising an alarm generator generating an alarm when said measured voltage (Vsens) is found to be less than, or alternatively greater than, said first threshold voltage (Vs1).

8. Control system (1,1') according to either claim 6 or claim 7, comprising a second comparator suitable for comparing said measured voltage (Vsens) with a second measured threshold voltage (Vs2).

9. Control system (1,1') according to one or more of claims 6 to 8, comprising means of shutdown to shut down said boiler when said alarm generator is active.

10. Control system (1,1') according to one or more of the preceding claims, including a condenser (C19) of which one terminal is connected to said second electrode (3b) upstream of said connection with said generator of a DC voltage signal (VDD) and of which the other terminal is connected to earth.

11. Method of condensate control in a boiler, by means of the control system according to claims 1 to 10, comprising the stages of:
- placing said condensate sensor (2) in an exchanger of said boiler so that when said condensate forms in said exchanger at least one of said electrodes is in contact with it,
- connecting said second electrode (3b) of said sensor (2) to said generator of a DC voltage signal (VDD),
- connecting said second electrode (3b) of said sensor to said port (P) of said microprocessor (6),
- reprogramming said port of said microprocessor from a first operating position in which between said electrodes (3a, 3b) is imposed a potential difference which is substantially zero to a second operating position of input port,
- in said second operating position, measuring a voltage signal (Vsens) which is a function of the voltage at the terminals of said electrodes (3a, 3b) of said sensor (2).

12. Method of control according to claim 11, comprising in addition the stages of:
- comparing said measured voltage (Vsens) with a first predetermined threshold voltage value (Vs1),
- generating a first alarm signal if said measured voltage value (Vsens) is below said predetermined threshold value (Vs1).

13. Method of control according to either claim 11 or claim 12, comprising the stage of reprogramming said port (P) of said microprocessor (6) between said first and said second operating position at a predetermined time interval (F).

14. Method of control according to any one of claims 11 to 13, wherein said generator of a DC voltage signal (VDD) is a second port (P2) of said microprocessor (6) programmable from a first to a second operating position, in said first operating position being set at zero volts or alternatively configured as an input port and in said -second operating position supplying a voltage signal (VDD).

15. Method of control according to claim 14, comprising the stage of reprogramming said second port (P2) of said microprocessor (6) between said first and said second operating position at predetermined time intervals, equal to the reprogramming intervals of said first port (P).

16. Method of control according to one of claims 11 to 15, wherein said port (P) is in said second operating position for a period of microseconds.

17. Method of control according to one or more of claims 11 to 16, comprising the stage of comparing said measured voltage (Vsens) with a second threshold value (Vs2), said second threshold value (Vs2) being greater than said first threshold value (Vs1).

18. Method of control according to claim 15, comprising in addition the stage of generating a second alarm signal when said measured voltage signal (Vsens) is greater than said second threshold value (Vs2).

19. Method of control according to one or more of claims 11 to 18, wherein said switch (6) is a port (P) of a microprocessor, and the stage of moving said switch (6) between said first and said second operating position comprises the stage of reprogramming said port (P) from a digital output to an analogue input.

20. Method of control according to claim 19, wherein said port (P) when programmed as a digital output is maintained at zero V.

21. Method of control according to one or more of claims 11 to 20, wherein said stage of generating a first alarm signal comprises the sub-stage of shutting down operation of said boiler.

22. Method of control according to one or more of claims 16 to 21, wherein said stage of generating a second alarm signal comprises the sub-stage of shutting down the operation of said boiler.

23. Method of control according to one or more of claims 11 to 22, wherein said stage of generating a first and/or a second alarm signal comprises the sub-stage of lighting a warning light.

24. Method according to one or more of claims 11 to 23, comprising, subsequently to the stage of generating an alarm signal, in addition the stage of reprogramming said port (P) between said first and said second operating position and measuring said voltage (Vsens) of said sensor (2) at a second predetermined time interval (F2).

25. Method according to claim 24 wherein said second time interval (F2) is longer than said first time interval (F1).

## Patentansprüche

1. Regelsystem (1, 1') für einen Kondensatsensor (2) für Boiler, umfassend:
- einen Kondensatsensor (2), der in einem Austauscher des Boilers so positioniert ist, dass, wenn sich in dem Austauscher Kondensat bildet, der Sensor (2) damit in Kontakt steht, und der eine erste Elektrode (3a) und eine zweite Elektrode (3b) umfasst,
- einen Gleichspannungssignalgenerator (VDD), der mit der zweiten Elektrode (3b) elektrisch verbunden ist,
- einen Mikroprozessor (6), der über seinen Port (P) mit der zweiten Elektrode (3b) elektrisch verbunden ist,
**dadurch gekennzeichnet, dass**
die erste Elektrode (3a) geerdet ist und der Port (P) umprogrammierbar ist von einer ersten Betriebsposition, in der die Potentialdifferenz zwischen der ersten Elektrode (3a) und der zweiten Elektrode (3b) im Wesentlichen gleich Null beträgt, und einer zweiten Betriebsposition, in der er ein Eingangsport ist, so dass ein Spannungssignal (Vsens) gemessen werden kann, das eine Funktion der Spannung an den Anschlüssen der Elektroden (3a, 3b) des Sensors (2) ist.

2. Regelsystem (1, 1') nach Anspruch 1, bei dem der Port (P) des Mikroprozessors (6) von einem digitalen Ausgang, der mit der ersten Betriebsposition korrespondiert, zu einem analogen Eingang, der mit der zweiten Betriebsposition korrespondiert, umprogrammierbar ist.

3. Regelsystem (1) nach Anspruch 1 oder Anspruch 2, bei dem der Generator eines Gleichspannungssignals (VDD) eine Batterie ist.

4. Regelsystem (1') nach Anspruch 1 oder Anspruch 2, bei dem der Generator eines Gleichspannungssignals (VDD) ein zweiter Port (P2) des Mikroprozessors (6) ist, der von einer ersten Betriebsposition in eine zweite Betriebsposition umgestellt werden kann.

5. Regelsystem (1, 1') nach einem oder mehreren der vorhergehenden Ansprüche, mit Messmitteln (6) zum Messen des Spannungssignals (Vsens), das eine Funktion der Spannung an den Anschlüssen der Elektroden (3a, 3b) des Sensors (2) ist.

6. Regelsystem (1, 1') nach einem oder mehreren der vorhergehenden Ansprüche, mit einem Komparator, der geeignet ist, die gemessene Spannung (Vsens) mit einer ersten vorgegebenen Schwellenspannung (Vs1) zu vergleichen.

7. Regelsystem (1, 1') nach Anspruch 6, umfassend einen Alarmgenerator, der einen Alarm erzeugt, wenn ermittelt worden ist, dass die gemessene Spannung (Vsens) weniger als, oder alternativ mehr als, die erste Schwellenspannung (Vs1) beträgt.

8. Regelsystem (1, 1') nach Anspruch 6 oder Anspruch 7, umfassend einen zweiten Komparator, der geeignet ist, die gemessene Spannung (Vsens) mit einer zweiten gemessenen Schwellenspannung (Vs2) zu vergleichen.

9. Regelsystem (1, 1') nach einem oder mehreren der Ansprüche 6 bis 8, umfassend Abschaltmittel zum Abschalten des Boilers, wenn der Alarmgenerator aktiviert ist.

10. Regelsystem (1, 1') nach einem oder mehreren der vorhergehenden Ansprüche, mit einem Kondensator (C19), bei dem ein Anschluss, unter Vorschaltung der Verbindung mit dem Gleichspannungssignalgenerator (VDD), mit der zweiten Elektrode (3b) verbunden ist und bei dem der andere Anschluss mit Erde verbunden ist.

11. Verfahren zur Kondensatregelung in einem Boiler mit Hilfe des Regelsystems nach den Ansprüchen 1 bis 10, umfassend die Schritte:
- Platzieren des Kondensatsensors (2) in einen Austauscher des Boilers so, dass, wenn sich in dem Austauscher Kondensat bildet, mindestens eine der Elektroden damit in Kontakt steht,
- Verbinden der zweiten Elektrode (3b) des Sensors (2) mit dem Gleichspannungssignalgenerator (VDD),
- Verbinden der zweiten Elektrode (3b) des Sensors mit dem Port (P) des Mikroprozessors (6),
- Umprogrammieren des Ports des Mikroprozessors von einer ersten Betriebsposition, in der zwischen den Elektroden (3a, 3b) eine Potentialdifferenz angelegt ist, die im Wesentlichen gleich Null beträgt, in eine zweite Betriebsposition als Eingangsport,
- Messen eines Spannungssignals (Vsens) in der zweiten Betriebsposition, das eine Funktion der Spannung an den Anschlüssen der Elektroden (3a, 3b) des Sensors (2) ist.

12. Regelungsverfahren nach Anspruch 11, umfassend außerdem die Schritte:
- Vergleichen der gemessenen Spannung (Vsens) mit einem ersten vorgegebenen Schwellenspannungswert (Vs1),
- Erzeugen eines ersten Alarmsignals, wenn der gemessene Spannungswert (Vsens) weniger als der vorgegebene Schwellenwert (Vs1) beträgt.

13. Regelungsverfahren nach Anspruch 11 oder Anspruch 12, umfassend den Schritt zum Umprogrammieren des Ports (P) des Mikroprozessors (6) zwischen der ersten und der zweiten Betriebsposition in einem vorgegebenen Zeitintervall (F).

14. Regelungsverfahren nach einem der Ansprüche 11 bis 13, bei dem der Gleichspannungssignalgenerator (VDD) ein zweiter Port (P2) des Mikroprozessors (6) ist, der von einer ersten Betriebsposition in eine zweite Betriebsposition programmierbar ist, wobei er in der ersten Betriebsposition auf null Volt gesetzt wird oder alternativ als Eingangsport ausgebildet wird und in der zweiten Betriebsposition ein Spannungssignal (VDD) liefert.

15. Regelungsverfahren nach Anspruch 14, umfassend den Schritt zum Umprogrammieren des zweiten Ports (P2) des Mikroprozessors (6) zwischen der ersten und der zweiten Betriebsposition in vorgegebenen Zeitintervallen, die gleich den Umprogrammierungsintervallen des ersten Ports (P) sind.

16. Regelungsverfahren nach einem der Ansprüche 11 bis 15, bei dem der Port (P) sich für eine Zeitdauer von Mikrosekunden in der zweiten Betriebsposition befindet.

17. Regelungsverfahren nach einem oder mehreren der Ansprüche 11 bis 16, umfassend den Schritt zum Vergleichen der gemessenen Spannung (Vsens) mit einem zweiten Schwellenwert (Vs2), wobei der zweite Schwellenwert (Vs2) größer ist als der erste Schwellenwert (Vs1).

18. Regelungsverfahren nach Anspruch 15, umfassend außerdem den Schritt zum Erzeugen eines zweiten Alarmsignals, wenn das gemessene Spannungssignal (Vsens) größer ist als der zweite Schwellenwert (Vs2).

19. Regelungsverfahren nach einem oder mehreren der Ansprüche 11 bis 18, bei dem der Schalter (6) ein Port (P) eines Mikroprozessors ist und der Schritt zum Umstellen des Schalters (6) zwischen der ersten und der zweiten Betriebsposition den Schritt zum Umprogrammieren des Ports (P) von einem digitalen Ausgang zu einem analogen Eingang umfasst.

20. Regelungsverfahren nach Anspruch 19, bei dem der Port (P), wenn er als digitaler Ausgang programmiert ist, auf null V gehalten wird.

21. Regelungsverfahren nach einem oder mehreren der Ansprüche 11 bis 20, bei dem der Schritt zum Erzeugen eines ersten Alarmsignals den Unterschritt zum Abschalten des Betriebs des Boilers umfasst.

22. Regelungsverfahren nach einem oder mehreren der Ansprüche 16 bis 21, bei dem der Schritt zum Erzeugen eines zweiten Alarmsignals den Unterschritt zum Abschalten des Betriebs des Boilers umfasst.

23. Regelungsverfahren nach einem oder mehreren der Ansprüche 11 bis 22, bei dem der Schritt zum Erzeugen eines ersten und/oder eines zweiten Alarmsignals den Unterschritt zum Anschalten eines Warnlichts umfasst.

24. Regelungsverfahren nach einem oder mehreren der Ansprüche 11 bis 23, umfassend, nach dem Schritt zum Erzeugen eines Alarmsignals, außerdem den Schritt zum Umprogrammieren des Ports (P) zwischen der ersten und der zweiten Betriebsposition und Messen der Spannung (Vsens) des Sensors (2) in einem zweiten vorgegebenen Zeitintervall (F2).

25. Regelungsverfahren nach Anspruch 24, bei dem das zweite Zeitintervall (F2) länger ist als das erste Zeitintervall (F1).

## Revendications

1. Système de contrôle (1, 1') pour un capteur de condensat (2) pour chaudières, comprenant :
- un capteur de condensat (2) placé dans un échangeur de ladite chaudière de sorte que lorsque ledit condensat se forme dans ledit échangeur, ledit capteur (2) est à son contact, et comprenant une première (3a) et une seconde électrode (3b),
- un générateur de signal de tension continue (VDD) relié électriquement à ladite seconde électrode (3b),
- un microprocesseur (6) relié électriquement, par son port (P), à ladite seconde électrode (3b), **caractérisé en ce que** ladite première électrode (3a) est mise à la terre, et ledit port (P) est reprogrammable d'une première position de fonctionnement dans laquelle la différence de potentiel entre ladite première (3a) et ladite seconde électrode (3b) est sensiblement égale à zéro en une seconde position de fonctionnement dans laquelle il est un port d'entrée de sorte qu'il est possible de mesurer un signal de tension (Vcapt) qui est fonction de la tension aux bornes desdites électrodes (3a, 3b) de ce capteur (2).

2. Système de contrôle (1, 1') selon la revendication 1, dans lequel ledit port (P) dudit microprocesseur (6) est reprogrammable d'une sortie numérique, correspondant à ladite première position de fonctionnement, en une entrée analogique, correspondant à ladite seconde position de fonctionnement.

3. Système de contrôle (1) selon la revendication 1 ou la revendication 2, dans lequel ledit générateur d'un signal de tension continue (VDD) est une batterie.

4. Système de contrôle (1') selon la revendication 1 ou la revendication 2, dans lequel ledit générateur d'un signal de tension continue (VDD) est un second port (P2) dudit microprocesseur (6) qui peut passer d'une première à une seconde position de fonctionnement.

5. Système de contrôle (1, 1') selon une ou plusieurs des revendications précédentes, comprenant des moyens de mesure (6) pour mesurer ledit signal de tension (Vcapt) qui est fonction de la tension aux bornes desdites électrodes (3a, 3b) dudit capteur (2).

6. Système de contrôle (1, 1') selon une ou plusieurs des revendications précédentes, comprenant un comparateur apte à comparer ladite tension mesurée (Vcapt) avec une première tension seuil prédéterminée (Vs1).

7. Système de contrôle (1, 1') selon la revendication 6, comprenant un générateur d'alarme qui génère une alarme lorsque ladite tension mesurée (Vcapt) s'avère inférieure, ou au contraire supérieure, à ladite première tension seuil (Vs1).

8. Système de contrôle (1, 1') selon la revendication 6 ou la revendication 7, comprenant un second comparateur apte à comparer ladite tension mesurée (Vcapt) avec une seconde tension seuil (Vs2) mesurée.

9. Système de contrôle (1, 1') selon une ou plusieurs des revendications 6 à 8, comprenant des moyens d'arrêt pour arrêter ladite chaudière lorsque ledit générateur d'alarme est actif.

10. Système de contrôle (1, 1') selon une ou plusieurs des revendications précédentes, comprenant un condenseur (C19) dont une première borne est reliée à ladite seconde électrode (3b) en amont de ladite liaison avec ledit générateur d'un signal de tension continue (VDD) et dont l'autre borne est reliée à la terre.

11. Procédé de contrôle de condensat dans une chaudière, au moyen du système de contrôle selon les revendications 1 à 10, comprenant les étapes suivantes :
- la mise en place dudit capteur de condensat (2) dans un échangeur de ladite chaudière de sorte que lorsque ledit condensat se forme dans ledit échangeur, au moins une desdites électrodes est à son contact,
- le raccordement de ladite seconde électrode (3b) dudit capteur (2) audit générateur d'un signal de tension continue (VDD),
- le raccordement de ladite seconde électrode (3b) dudit capteur audit port (P) dudit microprocesseur (6),
- la reprogrammation dudit port dudit microprocesseur d'une première position de fonctionnement dans laquelle entre lesdites électrodes (3a, 3b) est imposée une différence de potentiel qui est sensiblement nulle en une seconde position de fonctionnement de port d'entrée,
- dans ladite seconde position de fonctionnement, la mesure d'un signal de tension (Vcapt) qui est fonction de la tension aux bornes desdites électrodes (3a, 3b) dudit capteur (2).

12. Procédé de contrôle selon la revendication 11, comprenant en outre les étapes suivantes :
- la comparaison de ladite tension mesurée (Vcapt) avec une première valeur de tension seuil prédéterminée (Vs1),
- la génération d'une première alarme si ladite valeur de tension mesurée (Vcapt) est inférieure à ladite valeur seuil prédéterminée (Vs1).

13. Procédé de contrôle selon la revendication 11 ou la revendication 12, comprenant l'étape de reprogrammation dudit port (P) dudit microprocesseur (6) entre ladite première et ladite seconde position de fonctionnement à un intervalle de temps prédéterminé (F).

14. Procédé de contrôle selon l'une quelconque des revendications 11 à 13, dans lequel ledit générateur d'un signal de tension continue (VDD) est un second port (P2) dudit microprocesseur (6) programmable d'une première à une seconde position de fonctionnement, dans ladite première position de fonctionnement étant fixé à zéro volt ou au contraire configuré comme un port d'entrée et dans ladite seconde position de fonctionnement fournissant un signal de tension (VDD).

15. Procédé de contrôle selon la revendication 14, comprenant l'étape de reprogrammation dudit second port (P2) dudit microprocesseur (6) entre ladite première et ladite seconde position de fonctionnement à des intervalles de temps prédéterminés, égaux aux intervalles de reprogrammation dudit premier port (P).

16. Procédé de contrôle selon l'une quelconque des revendications 11 à 15, dans lequel ledit port (P) est dans ladite seconde position de fonctionnement pendant une durée de quelques microsecondes.

17. Procédé de contrôle selon une ou plusieurs des revendications 11 à 16, comprenant l'étape de comparaison de ladite tension mesurée (Vcapt) avec une seconde valeur seuil (Vs2), ladite seconde valeur seuil (Vs2) étant supérieure à ladite première valeur seuil (Vs1).

18. Procédé de contrôle selon la revendication 15, comprenant en outre l'étape de génération d'un second signal d'alarme lorsque ledit signal de tension mesuré (Vcapt) est supérieur à ladite seconde valeur seuil (Vs2).

19. Procédé de contrôle selon une ou plusieurs des revendications 11 à 18, dans lequel ledit commutateur (6) est un port (P) d'un microprocesseur, et l'étape de basculement dudit commutateur (6) entre ladite première et ladite seconde position de fonctionnement comprend l'étape de reprogrammation dudit port (P) d'une sortie numérique en une entrée analogique.

20. Procédé de contrôle selon la revendication 19, dans lequel ledit port (P), lorsqu'il est programmé en tant que sortie numérique, est maintenu à zéro V.

21. Procédé de contrôle selon une ou plusieurs des revendications 11 à 20, dans lequel ladite étape de génération d'un premier signal d'alarme comprend la sous-étape d'arrêt du fonctionnement de ladite chaudière.

22. Procédé de contrôle selon une ou plusieurs des revendications 16 à 21, dans lequel ladite étape de génération d'un second signal d'alarme comprend la sous-étape d'arrêt du fonctionnement de ladite chaudière.

23. Procédé de contrôle selon une ou plusieurs des revendications 11 à 22, dans lequel ladite étape de génération d'un premier et/ou d'un second signal d'alarme comprend la sous-étape d'allumage d'un voyant d'avertissement.

24. Procédé selon une ou plusieurs des revendications 11 à 23, comprenant en outre, consécutivement à l'étape de génération d'un signal d'alarme, l'étape de reprogrammation dudit port (P) entre ladite première et ladite seconde position de fonctionnement et de mesure de ladite tension (Vcapt) dudit capteur (2) à un second intervalle de temps prédéterminé (F2).

25. Procédé selon la revendication 24 dans lequel ledit second intervalle de temps (F2) est plus long que ledit premier intervalle de temps (F1).
